Europäisches Patentamt

European Patent Office

Office européen des brevets

(19)

(11) Publication number: **0 048 179**

**A2**

(12) **EUROPEAN PATENT APPLICATION**

(21) Application number: **81304268.6**

(22) Date of filing: **17.09.81**

(51) Int. Cl.³: **F 01 K 23/04**
**G 21 D 5/12**

(30) Priority: **17.09.80 GB 8030096**

(43) Date of publication of application:
**24.03.82 Bulletin 82/12**

(84) Designated Contracting States:
**AT DE GB NL**

(71) Applicant: Babcock Power Limited
Maypole House 128-132, Borough High Street
London SE1 4YB(GB)

(72) Inventor: Campbell, John William Edmund
"Ramla" Altwood Drive
Maidenhead Berkshire(GB)

(74) Representative: Lewis, David Overington
c/o Babcock International Ltd. Cleveland House 19 St.
James's Square
London SW1Y 4LN(GB)

(54) Thermal power plants.

(57) In a binary fluid power plant (Figure 1) in which the "bottom fluid" is steam/water and the evaporator (22) for the water is arranged in the condensing system for the "top fluid", the said evaporator is heated by top fluid condensate but only after the said condensate has been cooled by steam heating means (23, 25), and the top fluid condensate, after leaving the said evaporator (22) in cooled condition, is caused to effect the condensation of the second fluid vapour, for example, by the spraying of it into the vapour space of the top fluid condenser (10). The system has been designed primarily for a nuclear reactor power plant (1) operating with the transfer of core heating indirectly to vaporize potassium as the top fluid of the binary fluid power plant.

FIG.1

EP 0 048 179 A2

Croydon Printing Company Ltd.

DESCRIPTION

This invention relates to thermal power plants.

Thermal power plants operative with continuous cyclic water heating, evaporation, steam expansion and steam condensation require to be designed for high boiler pressures if, as will be desirable for high thermodynamic efficiencies, the water/steam cycle is to extend to high evaporation temperatures, since the thermal efficiency of plant employing a condensing steam cycle is largely limited by the proportion of heat which has to be supplied as sensible or evaporative heat at modest temperatures and the limitations on the obtainable superheat and reheat temperatures imposed by the tube scantlings required for high steam pressures at high temperatures. Accordingly so-called binary-fluid plants have been proposed which use simultaneously with the steam/water cycle a continuous cycle of a second working fluid, e.g. mercury, having the property of higher evaporation temperatures at lower or much lower pressures than would be required for high temperature evaporation in a steam/water cycle, the two cycles being combined by arranging a steam generator for the steam/water cycle in the condensing system of the second working fluid, most simply by arranging that the vapour of the second working fluid or "top fluid", after driving its prime mover, e.g. a turbine, contacts heat exchange tubes supplied with water in the steam/water cycle and condenses in giving up heat to evaporate the water supplied to the tubes.

Some nuclear reactor and fossil fuel fired power plants may be designed to evaporate potassium for driving a turbine. In one nuclear reactor design potassium is vaporized in an indirect-contact heat exchanger by liquid sodium coolant of a fast reactor;

in another nuclear reactor design potassium is vaporized in an indirect-contact heat exchanger by an inert salt which cools the fuel-laden molten salt of a molten salt reactor. In order to avoid very low pressures with consequent large volumetric flows the minimum temperature of potassium vapour condensation of the potassium is limited to above $600^{o}C$, and if the potassium were used as the top fluid in a binary-fluid power plant such as mentioned above, there would have to be tolerated certain practical difficulties associated with operating with high temperature differences between the top fluid condensing on the outer faces and the water evaporating internally of the heat exchange tubes of the evaporator.

In a thermal power plant operative with continuous cyclic heating, evaporation, vapour expansion and vapour condensation of two working fluids, an evaporator for the steam/water cycle being arranged in the condensing system of the other, according to the present invention means are provided for withdrawing condensate from a condenser for the second working fluid, cooling it in steam heating means of the steam/water cycle, further cooling it in an evaporator of the steam/water cycle and returning it to the said condenser thereby to effect second working fluid condensation therein.

In such arrangement the top fluid vapour condenses in giving up latent heat all of which is transferred to the steam/water cycle; however, the steam/water cycle evaporator receives top fluid at a temperature below the top fluid condensate temperature in the top fluid condenser and therefore owing to the previous cooling of the condensate by the steam heating means the evaporator may be operated with lower temperature differences across the tube walls.

The condensing of the top fluid vapour in the condenser by means of the cooled condensate returned to the condenser may be effected by indirect heat exchange but more simply it may be effected by direct contact and preferably by spraying the cooled condensate into the vapour space of the condenser.

The top fluid condenser may require to be located closely with the top fluid turbine or other prime mover. However, the steam evaporator, since it is not part of the condenser, may if desired be located remotely from the top fluid prime mover.

Suitably the top fluid condensate flow path from the condenser through the steam heating means and the steam evaporator and back to the condenser constitutes a top fluid condensate loop or sub-circuit outside the main circulation path for the top fluid cycle. In the said main circulation path an extraction pump suitably withdraws condensate from a hot well of the condenser and passes it onward for top fluid heating and evaporation.

The invention will now be described by way of example with reference to the accompanying schematic drawings, in which

Figure 1 shows the major elements of a nuclear reactor binary fluid power plant operative with both potassium vapour and steam driving the prime motive means and

Figure 2 shows a sub-dividing of part of a potassium sub-circuit of the potassium cycle of the power plant of Figure 1.

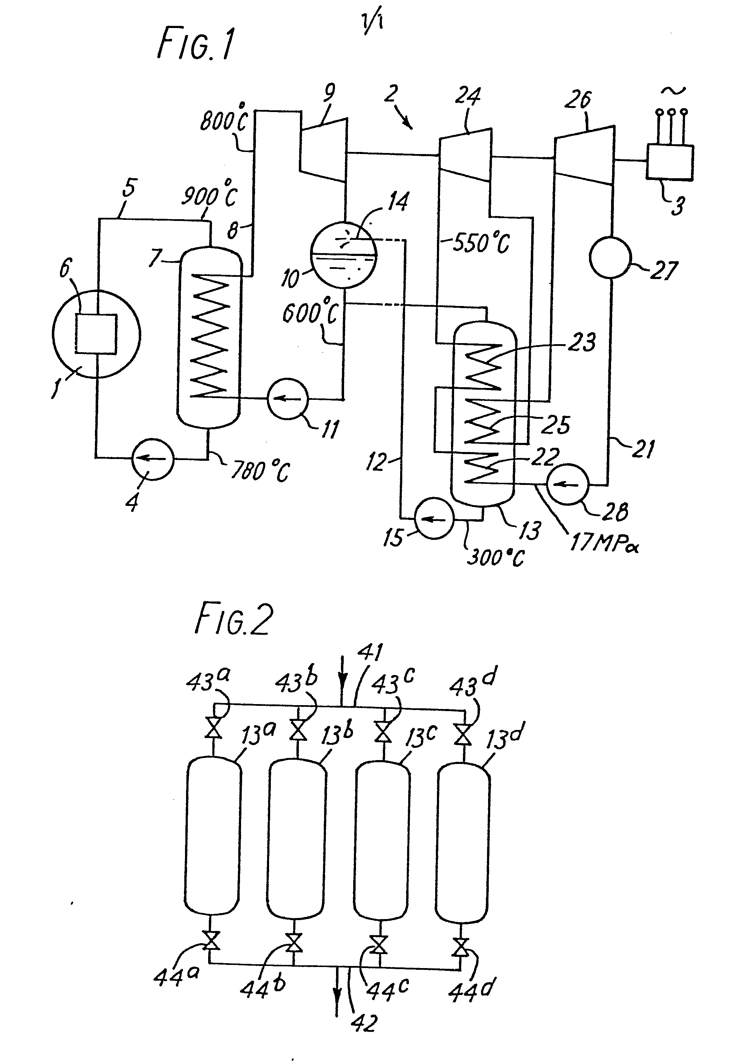

With reference to Figure 1 of the drawings, a thermal power plant in which the primary heat source is a nuclear reactor 1 is operative with the continuous cyclic heating, evaporation, vapour expansion in prime motive means 2 driving an electric generator 3, and vapour condensation of two working fluids, which are potassium and steam/water.

The reactor is cooled by liquid sodium which is caused by a pump 4 continuously to traverse a circulation path 5 through the nuclear reactor core 6 to cool the core and then through an indirect-contact heat exchanger 7 to cool the liquid sodium. The indirect contact heat exchanger 7 is arranged in cooling the sodium to heat and evaporate liquid potassium and somewhat superheat the resultant potassium vapour in a circulation path 8 which comprises the heat exchanger 7, a potassium vapour turbine 9 of the prime motive means 2, connected to receive the superheated potassium vapour from the heat exchanger 7, a potassium vapour condenser 10 connected to receive expanded potassium vapour from the potassium turbine 9 and a pump 11 connected to receive liquid potassium condensed in the condenser 10 and to deliver it continuously to the heat exchanger 7. The potassium circulation path may include means (not shown) for regenerative feed heating comprising not more than one, it is envisaged, potassium vapour bleed line from an intermediate stage of the potassium turbine to a potassium liquid feed heater in the connection between the pump 11 and the heat exchanger 7.

The potassium circulation path 8 includes a return-flow loop or sub-circuit 12 connected for a continuous flow of liquid potassium condensed in the condenser 10 to an indirect contact heat exchanger 13 arranged to cool said flow and from said heat exchanger to liquid potassium spraying means 14 in the potassium vapour space of the condenser 10, which spraying means are designed to effect the necessary condensation of the potassium vapour which enters said vapour space after having been expanded in the potassium turbine 9. As it is shown in the drawing, the potassium flow in the sub-circuit 12 is effected by a pump 15 positioned in the sub-circuit connection from the heat exchanger 13 to the spraying means 14 but if the lay-out of components in an actual power plant dictates more than a small raising of liquid potassium in the sub-circuit above the level of the condenser 10 then the pump 15 should be re-positioned, or an auxiliary pump provided, in the sub-circuit connection leading to the heat exchanger, in order thereby to ensure that at no point in the sub-circuit shall liquid potassium flash into vapour.

The cooling of liquid potassium in the heat exchanger 13 is effected by a continuous flow of steam/water working fluid in a circulation path 21. The circulation path 21 comprises an evaporating tube bank 22 in the heat exchanger 13, a superheating tube bank 23 in the heat exchanger 13 connected to receive steam from the evaporating tube bank 22, a high pressure steam turbine 24 of the prime motive means 2 connected to receive superheated steam from the superheating tube bank 23, a reheating tube bank 25 in the heat exchanger 13 connected to receive partly expanded steam from the high pressure steam turbine 24, a low pressure steam turbine 26 of the prime motive means 2 connected to receive reheated steam from the reheating tube bank 25, a condenser 27 connected to receive expanded steam

from the low pressure turbine 26 and a pump 28 connected to receive water condensate from the condenser 27 and to deliver it to the evaporating tube bank 22. The steam/water cycle may include an economiser and regenerative feed heating means (not shown).

As it is shown in the drawing, the heat exchanger 13 is arranged for general downflow of liquid potassium over the mentioned tube banks 22, 23 and 25 and such a downward flow direction of the liquid potassium as it becomes cooled by the tube banks will be preferred. The two steam heating tube banks 23 and 25 lie above the evaporating tube bank 22, which last therefore is contacted by the liquid potassium only after the potassium has lost heat in superheating and reheating steam in the steam/water cycle. As it is shown in the drawing, the evaporating tube bank 22 is arranged for general upflow of water in the said bank as the water is being vaporized and such an upward water flow direction in the tube bank 22 will be preferred.

In operation of the plant, the reactor core 6 heats the cooling sodium to an envisaged temperature of, say, $900^{O}C$ and the heat exchanger 7 in the sodium circuit 5 re-cools it to, say, $780^{O}C$ in evaporating and slightly superheating to, say, $800^{O}C$ liquid potassium received from the condenser 10 at, say, $600^{O}C$. The heat exchanger 13 in the potassium loop or sub-circuit 12 receives liquid potassium from the condenser 10 and cools it to, say, $300^{O}C$ in evaporating water at a pressure of, say 17 Mega Pascal, and in superheating the resulting steam to, say, $550^{O}C$ and in reheating the steam. The electric generator 3 is provided by the turbine 9 driven by the potassium vapour in the potassium circuit 8 and by the turbines 24 and 26 driven respectively by superheated steam and reheated steam in the steam/water circuit 21.

The potassium vapour condenses in giving up latent heat all of which is transferred to the steam/water cycle; however, the potassium condensing temperature of the order of $600^{O}C$ is not that at which heat is supplied for the water evaporation, for, by virtue of the presence of the proceeding steam heating banks 23 and 25 in the potassium flow in the sub-circuit 12, the evaporating tube bank 22 receives liquid potassium at a much lower temperature, say $500^{O}C$, for evaporating water at the a saturation temperatures of $350^{O}C$ corresponding to the water pressure of 17 Mega Pascal.

To the possibility that the heat exchanger 13, although part of the vapour condensing system of the potassium cycle, need not be located in the plant adjacent the potassium turbine 9 or condenser 10, attention is drawn in Figure 1 by the interrupted representation of parts of the two connections between the condenser 10 and the heat exchanger 13.

Figure 1 represents, prior to the evaporating tube bank 22 in the potassium flow in the heat exchanger 13, a steam reheating tube bank 25 in addition to the steam superheating tube bank 23 but, if the size of the plant and its designed duty and other factors allow, steam reheating means may in a modification, be dispensed with; in another modification, the two vapour heating tube banks 23 and 25, instead of being positioned one before the other in the potassium flow, such side-by-side bank arrangement and the evaporating tube bank; and there may be possible and desirable under appropriate circumstances other arrangements of the steam heating means in the potassium flow in the potassium sub-circuit prior to the evaporating means of the steam/water cycle.

The heat exchanger 13 is advantageously designed not as a single vessel but as a plurality of similar vessels traversed by potassium condensate flow in parallel paths. With reference to Figure 2, in place of a single-vessel heat exchanger 13 four heat exchanger vessels 13a, 13b, 13c and 13d are shown, which are connected at their upper,inlet ends with a manifold 41 assumed to be supplied from the potassium vapour condenser 10 of Figure 1 and connected at their lower, outlet ends with a manifold 42 assumed to deliver to the pump 15 of Figure 1. Each of the four vessels contains tube banks arranged in the potassium flow path therein according to any of the ways mentioned in connection with Figure 1, the connections of which through the vessel walls are not shown. Quick-acting inlet valves 43a, 43b, 43c and 43d in the potassium inlet connections from the manifold 41 to the respective vessels 13a, 13b, 13c and 13d and similar quick-acting outlet valves 44a, 44b, 44c and 44d make possible confinement, in the event of a tube failure, of potassium steam or water reaction products to only the particular one of the four vessels that may be involved. Quick acting valves (not shown) are provided to enable the corresponding tube banks in such vessel to be also taken out of operation while the tube banks in the other vessels remain in operation.

It will be appreciated that whilst the foregoing description refers to a nuclear reactor as a primary heat source, the invention is also applicable to designs utilising other primary heat sources, such as, for example, a fossil fuel fired furnace.

0048179

## CLAIMS

1. A thermal power plant operative with continuous cyclic heating, evaporation, vapour expansion and vapour condensation of two working fluids, an evaporator for the steam/water cycle being arranged in the condensing system of the other, characterized in that means are provided for withdrawing condensate from a condenser for the second working fluid, cooling it in steam heating means of the steam/water cycle, further cooling it in an evaporator of the steam/water cycle and returning it to the said condenser thereby to effect second working fluid condensation therein.

2. A plant as claimed in Claim 1, characterized in that the means for returning cooled second fluid condensate to the said condenser includes means for spraying the cooled condensate into the vapour space of the condenser.

3. A plant as claimed in Claim 1 or Claim 2, characterized in that the second fluid condensate path from the said condenser through the steam heating means and the steam evaporator and back to the condenser constitutes a second fluid condensate loop or sub-circuit outside the main circulation path of the second fluid.

4. A plant as claimed in any of Claims 1 to 3, characterized in that the steam heating means comprise both steam superheating means and steam reheating means of the steam/water cycle.

5. A plant as claimed in any of Claims 1 to 4, characterized in that further water heating means are positioned downstream in the condensate flow path of the evaporator.

6.    A plant as claimed in any of Claims 1 to 5,
characterized in that a heat exchanger traversed by second
fluid condensate for steam heating and steam evaporation
is subdivided into a plurality of similar vessels arranged
for flows of second fluid condensate therethrough in
parallel and each containing steam heating means and steam
evaporating means and each provided at its inlet and outlet
connections for the second fluid with quick-acting
valves.

7.    A plant as claimed in any of Claims 1 to 6, characterized
in that the source of heat is a nuclear reactor, which heat
is indirectly transferred to the higher temperature working
fluid.

8.    A plant as claimed in any of Claims 1 to 7,
characterized in that the higher-temperature working fluid
is potassium.

FIG.1

FIG.2